Europäisches Patentamt

European Patent Office

Office européen des brevets

(19)

(11) Publication number: **0 256 589 B1**

# EUROPEAN PATENT SPECIFICATION

(45) Date of publication of patent specification: **08.05.91**  (51) Int. Cl.⁵: **B21D 22/04**, F16B 43/00

(21) Application number: **87201463.4**

(22) Date of filing: **31.07.87**

(54) **A method and device for manufacturing washer or supporting plates.**

(30) Priority: **06.08.86 NL 8602014**

(43) Date of publication of application:
**24.02.88 Bulletin 88/08**

(45) Publication of the grant of the patent:
**08.05.91 Bulletin 91/19**

(84) Designated Contracting States:
**AT BE CH DE ES FR GB IT LI LU NL SE**

(56) References cited:
CH-A- 608 080          FR-A- 1 273 667
FR-A- 1 588 097       FR-A- 2 520 947
GB-A- 1 520 851        US-A- 3 116 542
US-A- 3 479 979        US-A- 3 520 170

(73) Proprietor: **van Berkel, Cornelis Everardus**
**Staringlaan 27**
**NL-1422 BG Uithoorn(NL)**

(72) Inventor: **van Berkel, Cornelis Everardus**
**Staringlaan 27**
**NL-1422 BG Uithoorn(NL)**

(74) Representative: **van der Beek, George Frans,**
**Ir. et al**
**Nederlandsch Octrooibureau Schevening-**
**seweg 82 P.O. Box 29720**
**NL-2502 LS 's-Gravenhage(NL)**

## Description

The invention relates to method for manufacturing and stacking a series of washers identical to each other in peripheral shape and dimensions, by punching said washers out of a large plate, a central hole being punched in each washer during the manufacturing thereof, whereby each washer is provided during the manufacture with at least three indentations at a distance from the central hole (2,12) which produce protrusions to one side, and whereby, when several washers are stacked, the protrusions of each washer lie outside the region of the indentations of a preceding or subsequent washer.

A method of this kind is known from CH-A-608,808. The washers according to said prior art are spherical washers having a central hole whilst the area between the central hole and the outer circumference is provided with at least three protrusions. Said protrusions can be spherical protrusions or linear protrusions. Viewed in circumferential direction of the circular circumference of the washers the protrusions are at different angles with respect to each other. The protrusions are provided to prevent sticking together of the washers when subjected to a surface treatment, such as hot galvanisation with zinc. Said washers can be manufactured by punching them out of a plate eventually with simultaneous manufacturing of the protrusions by means of indentations. Said washers can be used, in combination with screws for fixing insulation materials on an underlayer, such as a roofing sheet. When said known washers would be placed in a magazine of a device to form in said magazine a stack of washers and released one by one from the magazine to be fixed by means of a screw, the possibility does exist, due to the circular circumference of the washers, that the protrusions of a plurality of washers fall in line with each other, which means that each protrusion of a washers fits into the indentation of the next washer. This means that the washers still could stick together in the magazine because said washers and the device are not free from grease and/or moisture and/or dirt. The device then cannot function properly.

The object of the invention is to provide a method by means of which washers can be manufactured and stacked for use in a magazine of a device for applying washers, in which stack the disadvantage of sticking together no longer can occur.

According to the invention this object is achieved in that that substantially square and flat washers are punched out,

that the central hole punched in each washer is made with a sloping edge pressed through towards one side of the washer,

that the indentations and protrusions respectively in subsequent washers of the stack are made by means of forming punches which, during the manufacturing of a series of washers, after the forming of one set of indentations and protrusions respectively for one washer, are displaced through an angle with respect to the central hole to obtain a different position of the indentations and protrusions respectively with respect to the side edges of the next washer, which washers are stacked with the four side edges in four common planes.

It is observed that the feature according to which the hole of each washer has a sloping edge is known in itself, e.g. from FR-A-1 273 667, which feature has the advantage to center the washers upon each other in the stack.

The square circumferential edge of the washers ensures that in the stack in which the washers are held in identical positions by the walls of the magazine forming the four planes, no mutual displacement of subsequent washers is possible. Due to the fact that the method of manufacturing takes care that the indentations in subsequent washers of the stack and accordingly the protrusions of subsequent washers always are at a distance from the protrusions of a preceding or next washer respectively it no longer is possible that the protrusions of one washer enter into the indentations of a next washer.

The stack can be delivered in a package and can easily be transferred towards the magazine of a machine without any risk that the washers change their mutual position.

Preferably the indentations are pressed in the same direction as the edge of the central hole.

In case the punches make spherical protrusions, as known from CH-A-608 080, in each washer plate three protrusions can be made which are at a mutual angle of 120°. Three protrusions already provide the required stability. Said protrusions must preferably amount to more than 10% of the distance over which the pressedthrough hole ede projects outside the plane of the plate in order to reliably prevent sticking at the position of the pressedthrough hole edges. Instead of three protrusions four, five or more protrusions are possible as well.

In case the punches make linear protrusions as known as well from CH-A-608 080 according to the inventions three protrusions can be made in each washer plate said linear protrusions are made according to the sides of a triangle.

The inventions also relates to a device by means of which a series of washers can be manufactured. known is a device for manufacturing a plurality of washers out of a plate comprising a punching device with a support for a large plate, means for the stepwise advance of the said plate, and in the direction of advance, first of all a punch which can be moved up and down for punching a central hole for each washer, then a punch which can be moved up and down for pressing the hole edge through and then a punch which can be moved up and down for cutting the washer provided with a hole out of the large plate.

According to the invention this device is characterized in that the punch for pressing each individual washer out of the large plate has a square circumferential cutting edge with rounded off corners, and

that around the punch for pressing the hole edge through, there are provided at least three forming punches for making the indentations, which forming punches are mounted in a ratchet wheel, which is rotatable around the centerline of the punch by means of which the central hole is pressed through, which ratchet wheel interacts with an element, which rotates the ratchet wheel through an angle during each return stroke of the punching device.

According to the invention the known device which during each punching step manufactured the central hole at one location of the large plate, the punching through of the edges of the central hole at another location and the punching out of the washer at still another location changed in such a manner according to the invention that during the manufacturing of the sloping edge of the central hole the indentations are made and that after shifting of the plate for the next punching step the punches which make the indentations are displaced over a predetermined angle. The result is that when the final punch punches the washers out of the plate said washers fall down in a stack in which they already have a position in which the protrusions of subsequent washers are displaced with respect to each other.

Preferably the angle is between 15 and 25°, in particular an angle of 20°.

It is observed that CH-A-608.080 with respect to the manufacturing of the protrusions only states that this eventually can take place during the punching out of each washer.

The invention now will be explained in more detail on the basis of the drawings.

Figure 1 shows a plan view of a supporting plate obtained with the method according to the invention.

Figure 2 is a section through a part of the plate of Figure 1 on a larger scale.

Figure 3 shows a variant of the plate of Figure 1.

Figure 4 shows the punching device for manufacturing the supporting plates diagrammatically in section.

Figure 5 shows diagrammatically a section along the line V-V in Figure 4.

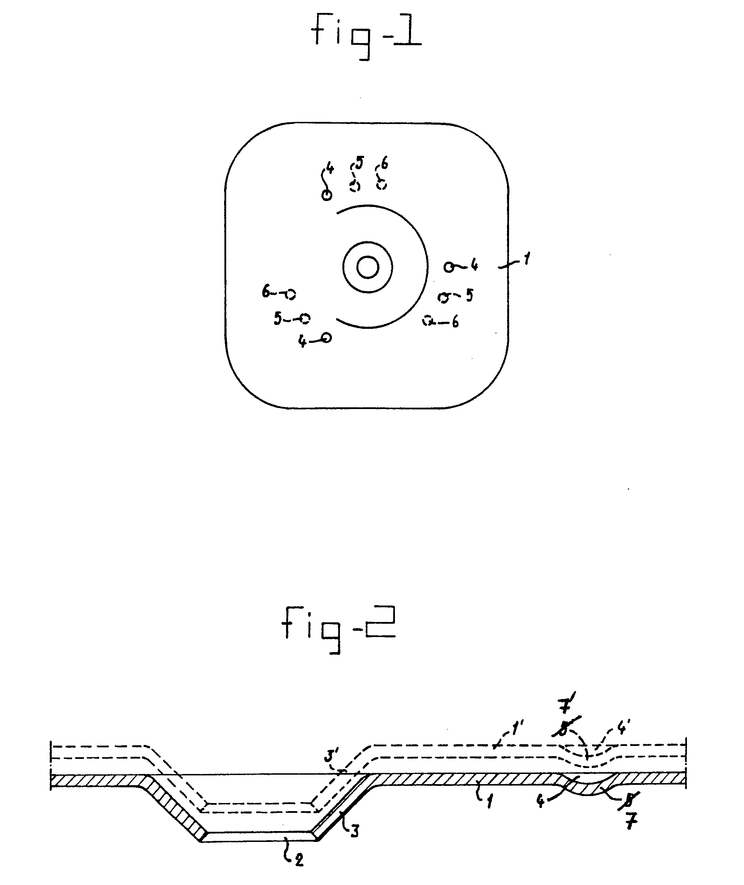

Figure 1 shows a square washer plate 1 with rounded corners which is provided with a central hole 2 having an edge 3 pressed through in a sloping manner, as can be more clearly seen in Figure 2.

In said plate three indentations 4 are provided which result in the protrusion 7 shown in Figure 2. These protrusions are provided regularly around the central hole 2 at a mutual angle of 120°.

5 indicates where the indentations, and consequently also the protrusions, of a plate situated in the stack under the plate 1 are located and 6 shows the indentations of the plate located in turn thereunder. The protrusions of each plate consequently always rest on a flat face section of a preceding plate if a stack of plates is fitted in a magazine which ensures that the plates are always situated with the side edges in the same plane.

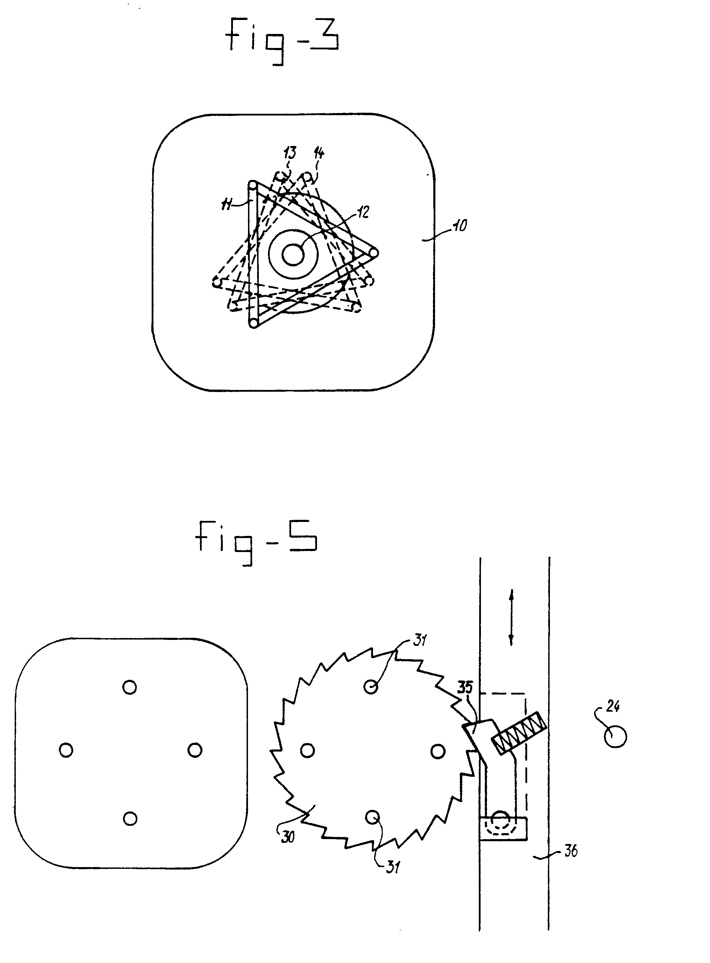

Figure 3 shows a plate 10 which is provided with linear indentations 11 which define a closed equilateral triangle and are symmetrical with respect to the central hole 12.

Here, too, 13 and 14 respectively indicate where the indentations are located in plates situated under the plate 10.

The linear indentations do not, of course, have to form a complete triangle. Linear indentations of shorter length are easier to manufacture.

With a plate thickness of 0.75 mm, the protrusion in the embodiment shown in Figure 2 amounts also to 0.75 mm. The pressed-through hole edge 3 has a spacing of 3.2 mm from the inside edge of the hole to the top face of the plate 1.

Figure 2 shows by means of broken lines the position of a subsequent plate 1' in which the indentation above the indentation 4 is shown but which is in reality staggered therefrom as shown in Figure 1. With the dimensions shown, the protrusion should amount to at least 0.3 mm in order to prevent adhesion nevertheless occurring at the position of the indentations 3 and 3'.

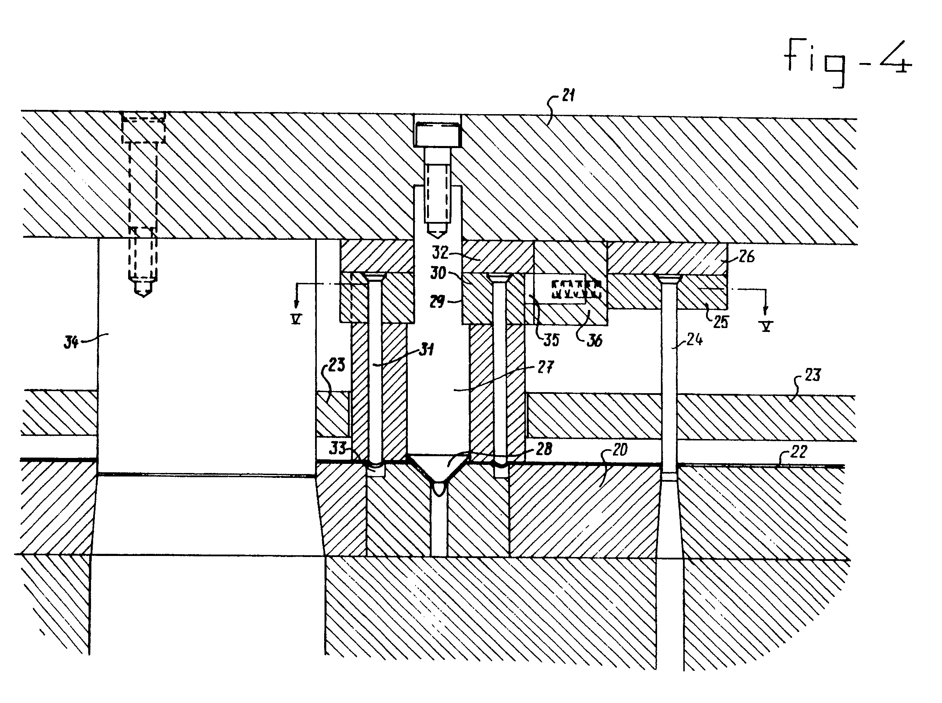

Figure 4 shows a punching device provided with a bottom plate or bottom knife 20 and a top plate 21 which can be moved up and down. This is moved up and down in a known manner by means of a cylinder.

The top face 22 of the bottom plate 20 forms the bearing face for a plate out of which the washer or supporting plate has to be punched.

Above this plate there is a stripper 23 which ensures that during the return stroke the plate remains free of the punches.

The top plate carries a punch 24 mounted in a punch holder 25 with head plate 26. Said punch 24 cuts a central hole in the plate in the manner as shown.

At 27 the top plate carries a punch 28 by means of which the hole made by the punch 24 is pressed through into the shape shown in Figure 2.

Mounted rotatably on the shank 29 of said punch 27 is a ratchet wheel 30 in which four forming punches 31 are mounted which are again held in their place by a head plate 32. Said punches are used to make the indentations or protrusions at the position of the cutters 33.

Next thereto, on the left, there is, on the top plate 21, the cutting knife 34 with which the periphery of the plate shown in Figure 1 or 3 respectively is cut out.

During each downward stroke of the punching device three operations are consequently performed simultaneously in three consecutive surface sections of a large plate, viz. the punching of the central hole, the pressing through of the hole edge of an already manufactured hole and the cutting out of the plate.

Figure 5 shows the ratchet wheel 30 and a spring-loaded catch 35 interacting therewith which is mounted in a rod 36 which can be moved to and fro horizontally and which is moved to and fro by a cylinder, not shown, which receives an instruction during the rising stroke of the punching device.

## Claims

1. Method for manufacturing and stacking a series of washers (1,10) identical to each other in peripheral shape and dimensions, by punching said washers (1,10) out of a large plate, a central hole (2,12) being punched in each washer (1,10) during the manufacturing thereof, whereby each washer (1,10) is provided during the manufacture with at least three indentations (4,5,6;11,13,14) at a distance from the central hole (2,12) which produce protrusions (7,7') to one side, and whereby, when several washers are stacked, the protrusions of each washer (1,10) lie outside the region of the indentations of a preceding or subsequent washer (1'), **characterized in**

   that substantially square and flat washers (1,10) are punched out,

   that the central hole (2,12) punched in each washer (1,10) is made with a sloping edge (3,3') pressed through towards one side of the washer (1,10),

   that the indentations and protrusions respectively in subsequent washers of the stack are made by means of forming punches (31) which, during the manufacturing of a series of washers, after the forming of one set of indentations and protrusions respectively in one washer (1), are displaced through an angle with respect to the central hole (2,12) to obtain a different position of the indentations and protrusions respectively of the next washer (1'), which washers are stacked with the four side edges in four common planes.

2. Method according to claim 1, **characterized in that** the indentations (4,5,6,11,13,14) are pressed in the same direction as the edge (3) of the central hole (2,12).

3. Method according to claim 1 or 2, wherein the punches make spherical protrusions, **characterized in that** in each washer plate three protrusions are made which at a mutual angle of $120°$.

4. Method according to claim 1 or 2, wherein linear punches make linear protrusions, **characterized in that** the linear protrusions (11,13,14) are made according to the sides of a triangle.

5. Device for manufacturing a plurality of washers out of a plate, comprising a punching device (20,21) with a support (22) for a large plate, means for the stepwise advance of the said plate, and in the direction of advance, first of all a punch (24) which can be moved up and down for punching a central hole (2,12) for each washer, then a punch (28) which can be moved up and down for pressing the hole edge (3) through and then a punch (34) which can be moved up and down for cutting the washer out of the large plate, **characterized in that**

   the punch (34) for pressing each individual washer out of the large plate has a square circumferential cutting edge with rounded off corners, and

   that around the punch (28) for pressing the hole edge through, there are provided at least three forming punches (31) for making the indentations (4,5,6,11,13,14), which forming punches (31) are mounted in a ratchet wheel (30), which is rotatable around the centerline of the punch (28) by means of which the central hole (2,12) is pressed through, which ratchet wheel (30) interacts with an element (35,36), which rotates the ratchet wheel (30) through an angle during each return stroke of the punching device.

6. Device as claimed in claim 5, **characterized in that** the angular rotation of the ratchet wheel (30) is between $15°$ and $25°$, preferably is $20°$.

## Revendications

1. Procédé pour fabriquer et empiler une série de rondelles (1, 10) identiques les unes aux autres en ce qui concerne leur forme et leurs dimensions périphériques, par découpage de ces rondelles (1, 10) par poinçonnage d'une grande plaque, un trou central (2, 12) étant percé par poinçonnage dans chaque rondelle (1, 10) au cours de la fabrication de celle-ci, chaque rondelle (1, 10) étant munie au cours de sa fabrication d'au moins trois indentations (4, 5, 6; 11, 13, 14) qui sont situées à une certaine distance du trou central (2, 12) et qui produisent des protubérances (7, 7') sur un côté de la rondelle, de sorte que, quand on empile plusieurs rondelles, les protubérances de chacune des rondelles (1, 10) se trouvent à l'extérieur de la région des indentations d'une rondelle (1') précédente ou suivante,
caractérisé
en ce qu'on découpe par poinçonnage des rondelles (1, 10) sensiblement carrées et plates,
en ce qu'on réalise le trou central (2, 12) découpé par poinçonnage dans chacune des rondelles avec un bord en pente (3, 3') refoulé à la presse vers un côté de la rondelle (1, 10),
en ce qu'on réalise les indentations et les protubérances respectivement dans des rondelles consécutives de la pile au moyen de poinçons de formage (31) qui, au cours de la fabrication d'une série de rondelles, et après le formage d'un ensemble d'indentations et de protubérances respectives dans une rondelle (1), sont déplacés d'un certain angle par rapport au trou central (2, 12) afin d'obtenir pour la rondelle (1') suivante une position différente des indentations et protubérances respectives, les rondelles étant empilées de façon que leurs quatre bords latéraux soient respectivement situés dans quatre plans communs correspondants.

2. Procédé conforme à la revendication 1, caractérisé en ce que les indentations (4, 5, 6, 11, 13, 14) sont réalisées par pressage dans le même sens que le bord (3) du trou central (2, 12).

3. Procédé conforme à l'une des revendications 1 ou 2, dans lequel les poinçons réalisent des protubérances sphériques, caractérisé en ce qu'on réalise dans chaque plaque pour rondelle trois protubérances qui sont décalées mutuellement d'un angle de 120°.

4. Procédé conforme à l'une des revendications 1 ou 2, dans lequel des poinçons linéaires réalisent des protubérances linéaires, caractérisé en ce qu'on réalise les protubérances linéaires (11, 13, 14) suivant les côtés d'un triangle.

5. Dispositif pour fabriquer un ensemble de rondelles dans une plaque, comportant un dispositif de poinçonnage (20, 21) avec un support (22) pour une grande plaque, des moyens pour faire avancer pas à pas ladite plaque, et, dans le sens de l'avance, en premier lieu un poinçon (24) que l'on peut déplacer vers le haut et vers le bas pour percer par poinçonnage dans chaque rondelle un trou central (2, 12), puis un poinçon (28) que l'on peut déplacer vers le haut et vers le bas pour refouler à la presse le bord (3) du trou, et enfin un poinçon (34) que l'on peut déplacer vers le haut et vers le bas pour découper la rondelle dans la grande plaque,
caractérisé
en ce que le poinçon (34) pour découper à la presse chaque rondelle individuelle dans la grande plaque présente un bord coupant circonférentiel carré avec coins arrondis, et
en ce qu'il est prévu, autour du poinçon (28) pour refouler le bord du trou, au moins trois poinçons (31) de formage pour réaliser les indentations (4, 5, 6, 11, 13, 14), ces poinçons de formage (31) étant montés sur une roue à rochet (30) qui peut tourner autour de l'axe du poinçon (28) au moyen duquel on refoule le trou central (2, 12), la roue à rochet (30) coopérant avec un élément (35, 36) qui fait tourner la roue à rochet (30) d'un certain angle au cours de chacune des courses en retour du dispositif de poinçonnage.

6. Dispositif conforme à la revendication 5, caractérisé en ce que l'angle de rotation de la roue à rochet (30) est compris entre 15° et 25° et est de préférence égal à 20°.

## Ansprüche

1. Ein Verfahren zum Herstellen und zum Stapeln einer Reihe von in der peripheren Form und den Abmessungen zueinander identischen Unterlegscheiben (1, 10) durch Stanzen der Unterlegscheiben (1, 10) aus einer großen Platte, wobei ein zentrales Loch (2, 12) in jede Unterlegscheibe (1, 10) während ihrer Herstellung gestanzt wird, und jede Unterlegscheibe (1, 10) während der Herstellung mit wenigstens drei Vertiefungen (4, 5, 6, 11, 13, 14) in einem Abstand von dem zentralen Loch (2, 12), welche Vorsprünge (7, 7') nach einer Seite erzeugen, versehen wird, und wobei, wenn mehrere Unterlegscheiben gestapelt werden, die Vorsprünge von jeder Unterlegscheibe (1, 10) außerhalb der Region der Vertiefungen von einer vorhergehenden oder nachfolgenden Unterlegscheibe (1') liegen,
**dadurch gekennzeichnet,**
daß im wesentlichen quadratische und flache Unterlegscheiben (1, 10) ausgestanzt werden, daß das zentrale Loch (2, 12) in jeder Unterlegscheibe (1, 10) mit einem geneigten Rand (3, 3'), der in Richtung zu einer Seite der Unterlegscheibe (1, 10) durchgedrückt ist, hergestellt ist,
daß die Vertiefungen bzw. Vorsprünge in nachfolgenden Unterlegscheiben des Stapels mit Hilfe von Formungsstempeln (31) hergestellt werden, welche, während der Herstellung einer Reihe von Unterlegscheiben, nach dem Formen eines Satzes von Vertiefungen bzw. Vorsprüngen in einer Unterlegscheibe (1) um einen Winkel in bezug auf das zentrale Loch (2, 12) verschoben werden, um eine unterschiedliche Position der Vertiefungen bzw. Vorsprünge der nächsten Unterlegscheibe (1') zu erhalten, wobei die Unterlegscheiben mit den vier Seitenrändern in vier gemeinsamen Ebenen gestapelt sind.

2. Verfahren nach Anspruch 1,
**dadurch gekennzeichnet,**
daß die Vertiefungen (4, 5, 6, 11, 13, 14) in der gleichen Richtung wie der Rand (3) des zentralen Loches (2, 12) gepreßt sind.

3. Verfahren nach Anspruch 1 oder 2, wobei die Stempel sphärische Vorsprünge erzeugen,
**dadurch gekennzeichnet,**
daß in jeder Unterlegscheibenplatte drei Vorsprünge, welche zueinander unter einem Winkel von 120° stehen, erzeugt werden.

4. Verfahren nach Anspruch 1 oder 2, wobei lineare Stempel lineare Vorsprünge erzeugen,
**dadurch gekennzeichnet,**
daß die linearen Vorsprünge (11, 13, 14) entsprechend den Seiten eines Dreieckes erzeugt werden.

5. Vorrichtung zur Herstellung einer Vielzahl von Unterlegscheiben aus einer Platte, wobei die Vorrichtung eine Stanzeinrichtung (20, 21) mit einem Träger (22) für eine große Platte, eine Einrichtung zum stufenweisen Vorschub der Platte, und in der Richtung des Vorschubes, vor allem einen Stanzstempel (24), welcher nach oben und unten zum Stanzen eines zentralen Loches (2, 12) für jede Unterlegscheibe bewegt werden kann, dann einen Stempel (28), welcher nach oben und unten zum Durchdrücken des gesamten Randes (3) bewegt werden kann, und dann einen Stempel (34), welcher nach oben und unten zum Ausschneiden der Unterlegscheibe aus der großen Platte bewegt werden kann, umfaßt,
**dadurch gekennzeichnet,**
daß der Stempel (34) zum Pressen jeder einzelnen Unterlegscheibe einen quadratischen Umfangsschneidrand mit abgerundeten Ecken aufweist, und
daß um den Stempel (28) zum Durchdrücken des gesamten Randes wenigstens drei Formungsstempel (31) zum Herstellen der Vertiefungen (4, 5, 6, 11, 13, 14) vorgesehen sind, wobei die Formungsstempel (31) auf einem Klinkenrad (30) montiert sind, welches um die Mittellinie des Stempels (28), mit dessen Hilfe das zentrale Loch (2, 12) durchgepreßt wird, drehbar ist, wobei das Klinkenrad (30) mit einem Element (35, 36) zusammenwirkt, welches das Klinkenrad (30) während jedes Rückkehrhubes der Stanzeinrichtung über einen Winkel dreht.

6. Vorrichtung nach Anspruch 5,
**dadurch gekennzeichnet,**
daß die Winkeldrehung des Klinkenrades (30) zwischen 14° und 25°, vorzugsweise 20°, beträgt.

# Fig-1

# Fig-2

# Fig-3

# Fig-5

Fig-4

EP 0 256 589 B1